# FASCICULE DE BREVET EUROPEEN

(11) **EP 2 007 947 B1**
(45) Date de publication et mention de la délivrance du brevet: **14.05.2014**
(21) Numéro de dépôt: 06754767.9
(22) Date de dépôt: 20.04.2006
(51) Int. Cl.: E01D 19/14

(54) **DISPOSITIF DE GUIDAGE POUR TORONS**
FÜHRUNGSVORRICHTUNG FÜR LITZEN
STRAND GUIDE DEVICE

(43) Date de publication de la demande: 31.12.2008
(73) Titulaire: VSL International AG, 3098 Köniz (CH)
(72) Inventeur: BOURNAND, Yves, F-78180 Montigny Le Bretonneux (FR); GNÄGI, Adrian, CH-3012 Bern (CH); TSCHAGGELAR, Hans, CH-4576 Tscheppach (CH)
(74) Mandataire: Scheuzger, Beat Otto
(86) Numéro de dépôt international: PCT/EP2006/061709
(87) Numéro de publication internationale: WO 2007/121782

(56) Documents cités:
- DE-A1- 19 934 872
- DE-U1- 8 810 423
- GB-A- 1 277 489

## Description

L'invention se rapporte à un dispositif de guidage pour torons.

L'invention se rapporte également aux constructions comprenant le dispositif de guidage pour torons précité.

L'invention s'applique plus particulièrement, mais non exclusivement à la réalisation de dispositifs de guidage pour les torons de câbles qui, constitués d'une pluralité de torons, sont utilisés en génie civil.

En effet, de nombreux ouvrages d'art et particulièrement les ponts comprennent des câbles qui sont utilisés pour, notamment, supporter des éléments de ces ouvrages et/ou les maintenir entre eux.

De tels câbles sont essentiellement sollicités en traction entre leurs extrémités opposées, mais il est fréquent qu'on utilise des dispositifs de guidage pour les maintenir latéralement et localement, de manière à, en quelque sorte, les dévier de la direction dans laquelle ils devraient s'étendre.

La fonction d'un dispositif de guidage du type précité est donc de permettre le maintien latéral et local d'un câble et le transfert de la charge induite par cette déviation à un support prévu à cet effet.

Un dispositif de guidage du type précité est destiné à être interposé entre le support et le câble.

Classiquement, un tel dispositif de guidage est conçu pour autoriser un appui individuel latéral et local de chaque toron du câble.

A cet effet, un dispositif de guidage comprend au moins une portée de guidage pour un toron de câble et de préférence une pluralité de portées de déviation permettant chacune l'appui individuel de l'un des torons d'un câble.

Un dispositif de guidage est constitué par un corps, en général massif, dans lequel est réalisé au moins un canal courbe, dit canal, destiné à être traversé par le toron.

Classiquement le corps comprend au moins autant de canaux que le câble à guider comprend de torons.

Classiquement, les torons sont chacun constitués de plusieurs fils, généralement mais non limitativement métalliques.

Les torons ont souvent une section transversale qui s'inscrit dans un cercle, mais cette section peut aussi être ovale ou d'une autre forme.

Les canaux ont quant à eux chacun une section transversale de forme sensiblement complémentaire à celle du toron qu'ils doivent recevoir.

Par exemple, lorsque les torons du câble ont chacun une section transversale qui s'inscrit dans un cercle, chaque canal a une section transversale sensiblement circulaire d'un diamètre supérieur au cercle dans lequel la section transversale d'un toron s'inscrit.

On peut considérer que chaque canal du corps comprend un axe longitudinal incurvé et au moins une première partie qui, principalement située du côté de l'intrados de l'axe longitudinal, permet, dans la limite de la longueur du canal, l'appui du toron sur une portion de la face périphérique dudit toron.

On peut également considérer que chaque canal comprend au moins une seconde partie qui, principalement située du côté de l'extrados de l'axe longitudinal, est associée à la première partie et permet de guider le toron lors de son engagement dans le canal afin de le conformer dans un plan de courbure qui contient l'axe longitudinal dudit canal.

Par axe longitudinal, on désigne un axe qui s'étend selon la dimension longitudinale du canal, mais pas obligatoirement en une position médiane par rapport à la dimension transversale du canal dans un plan de courbure de ce canal.

L'axe longitudinal indiqué a pour fonction de permettre la définition d'un intrados et d'un extrados, l'intrados étant une première zone située à l'intérieur de la courbe formée par cet axe longitudinal et l'extrados étant une seconde zone située à l'extérieur de la courbe formée par ledit axe longitudinal.

Classiquement, chaque canal est de section transversale circulaire.

A titre d'illustration, le corps du dispositif est constitué par une masse de béton et chaque canal est formé par le passage d'un tube courbe emprisonné dans ladite masse de béton.

GB 1 227 489 donne un exemple d'une structure précontrainte dans laquelle un dispositif est utilisé pour dévier les torons. Dans la structure proposée, un moyen de déviation bouge ensemble avec un toron par rapport à un support.

Quoi qu'il en soit, les dispositifs de ce type ont leurs avantages, mais on déplore essentiellement que les torons qui traversent ces dispositifs de guidage puissent se déplacer axialement, après montage et lorsqu'ils sont en charge et soumis à des variations de tension de part et d'autre du dispositif de guidage.

DE-U-8810423 est considéré l'état de la technique le plus proche montrant les caractéristiques du préambule de la revendication 1.

Un résultat que l'invention vise à obtenir est un dispositif de guidage du type précité avec lequel les torons sont mieux maintenus et sont, de ce fait et dans une large mesure, moins sensibles aux sollicitations qui tendent à les déplacer axialement.

A cet effet, l'invention a pour objet un dispositif de guidage selon la revendication 1.

L'invention se rapporte également aux constructions comprenant le dispositif de guidage pour torons précité.

L'invention sera mieux comprise à la lecture de la description ci-après faite à titre d'exemple non limitatif en regard du dessin ci-annexé qui représente schématiquement :

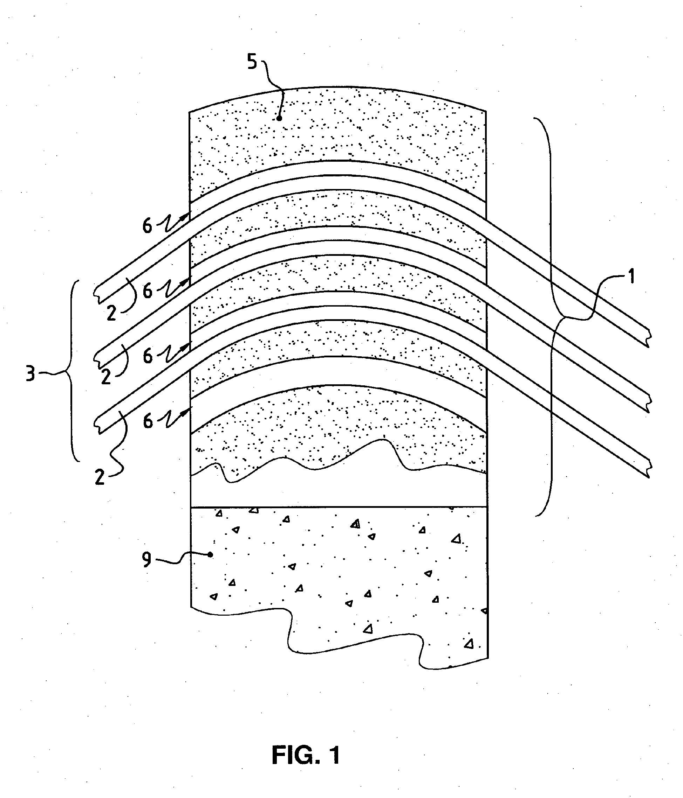

Figure 1 : le dispositif de guidage selon l'invention, vu en coupe selon un plan longitudinal,

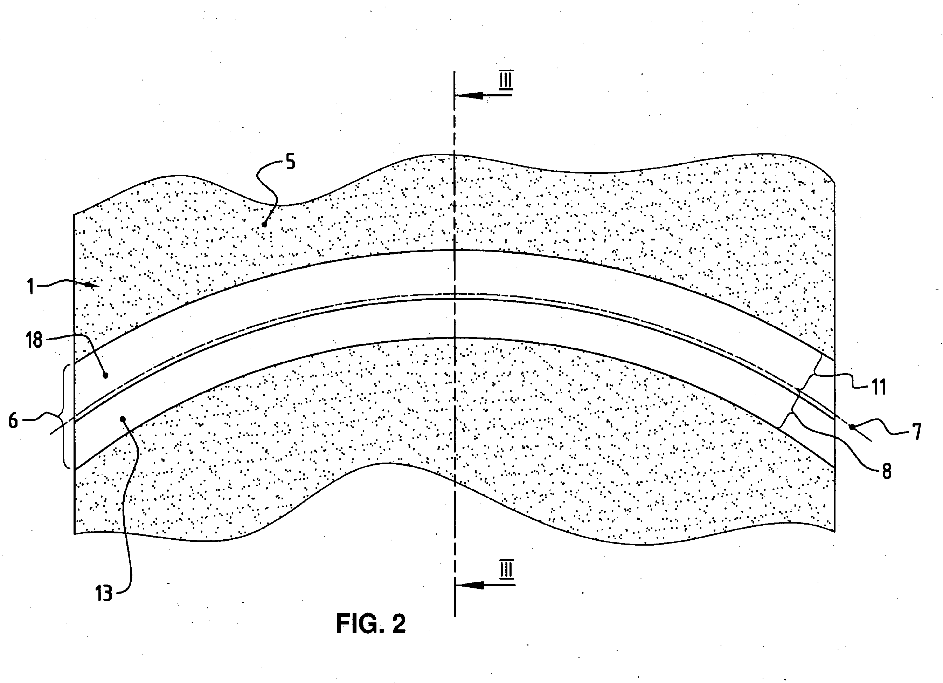

Figure 2 : vu à plus grande échelle, un détail du dispositif de la figure 1 montrant l'un des canaux du dispositif,

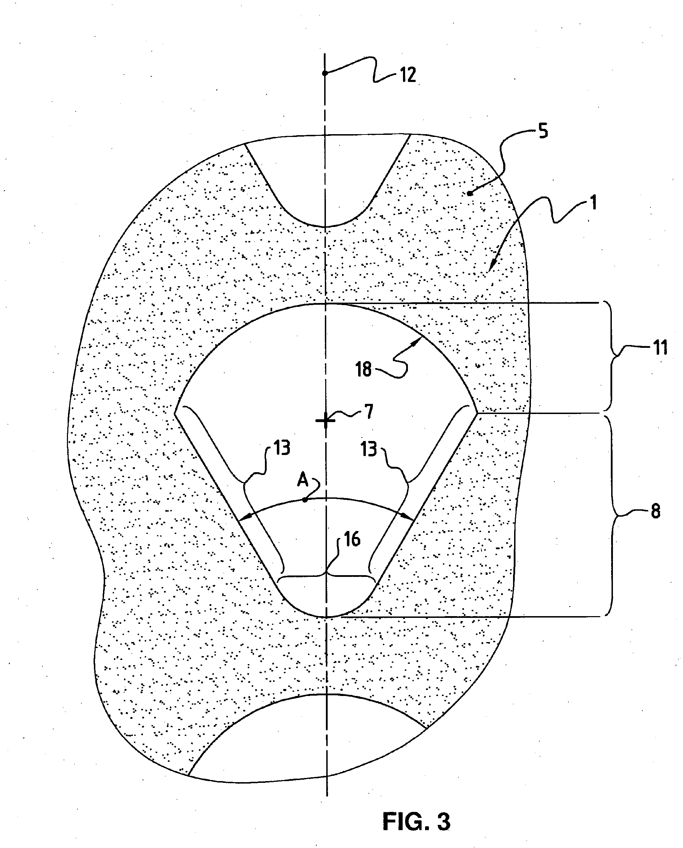

Figure 3 : une vue en coupe du détail de la figure 2, selon le plan III-III,
Figures 4 et 5 : le détail de la figure 3, lorsqu'un toron traverse le canal.
Figures 6 à 8 : trois vues en coupe transversale d'un toron dans différentes versions.

En se reportant au dessin, on voit un dispositif de guidage 1 pour torons 2.

Par exemple, il s'agit d'un dispositif de guidage 1 pour les torons 2 d'un câble 3 constitué d'une pluralité de torons 2.

Classiquement, les torons 2 sont chacun constitués de plusieurs fils 4, notamment, métalliques.

Par exemple, le toron 2 comprend un groupe de sept fils 4.

Les torons 2 représentés ont une section transversale qui s'inscrit dans un cercle, mais ils pourraient également s'inscrire dans un ovale ou dans une autre forme.

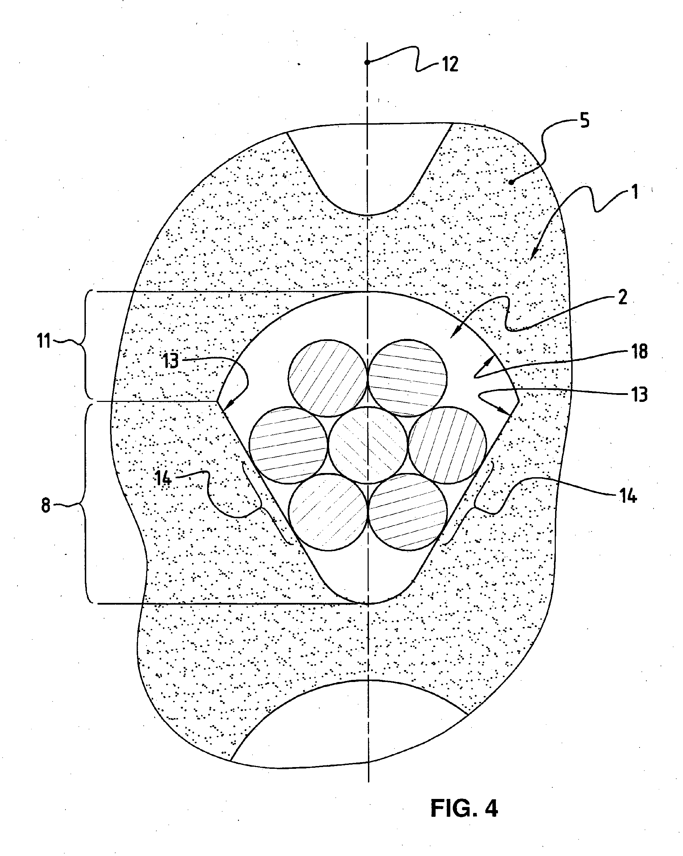

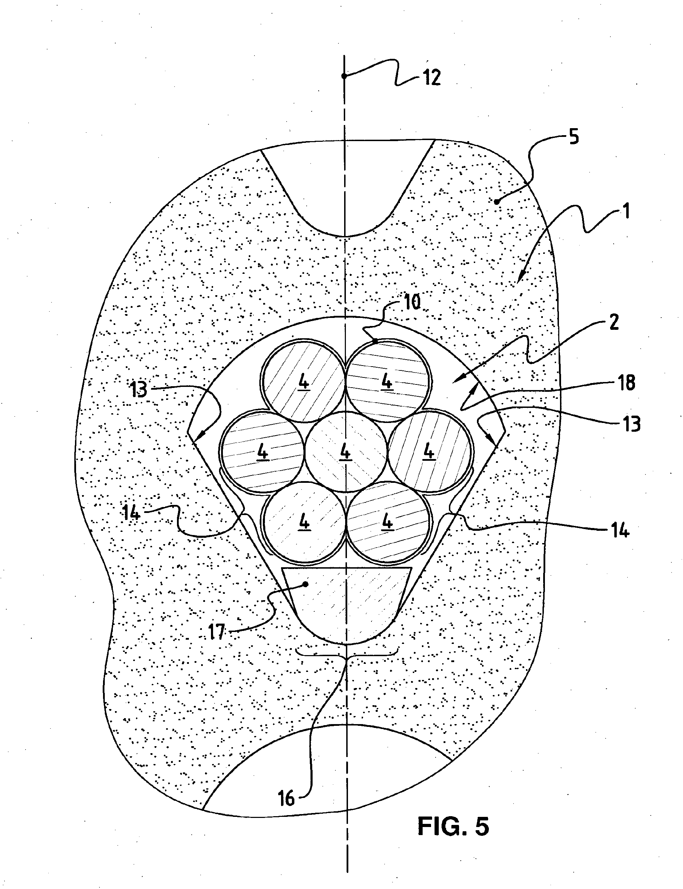

Sur les dessins, aux figures 4 et 5, on a représenté un toron 2 qui s'apparente à un toron de type dit « toron non gainé », mais cela n'a pas de caractère limitatif pour l'invention.

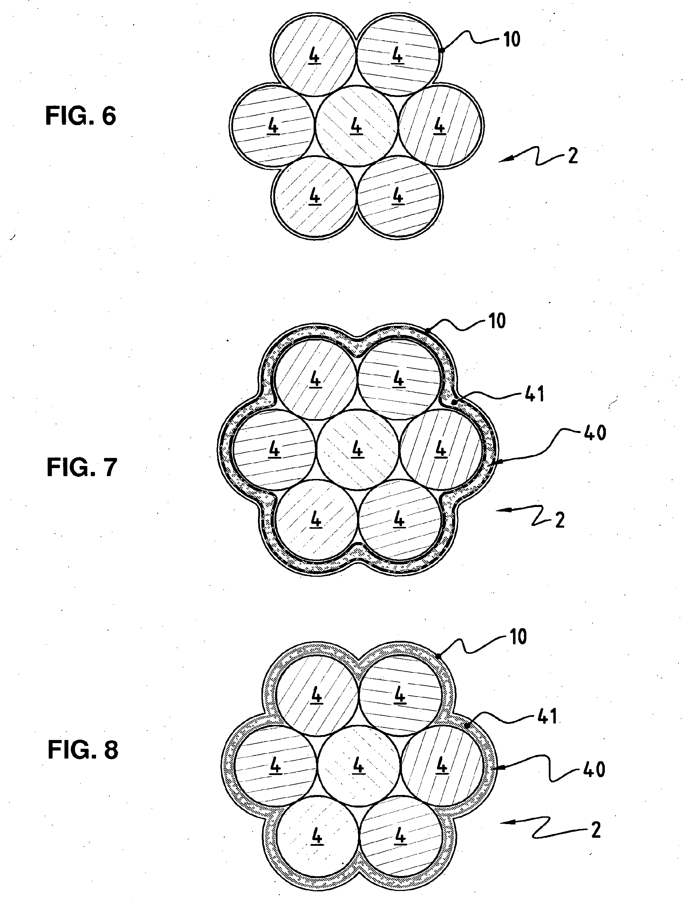

Un tel toron non gainé est représenté à la figure 6.

A contrario, un toron gainé est un toron 2 dont les fils 4 constitutifs sont, sur au moins une partie de leur longueur, contenus et/ou enserrés dans une gaine 40 formée par au moins une paroi tubulaire 41 (figure 7), telle une paroi tubulaire 41 constituée de matériau polyéthylène.

Egalement, un toron gainé peut aussi être un toron 2 dont les fils 4 constitutifs sont, sur au moins une partie de leur longueur, contenus et/ou enserrés dans une gaine 40 formée par au moins une paroi assimilable à une paroi tubulaire 41, par exemple une paroi constituée par enduction (figure 8), enroulement (version non représentée) ou tout autre procédé.

A titre de paroi constituée par enduction, on peut citer une paroi consistant en une couche de matériau non métallique, par exemple polymérique tel de l'époxy, voire en une couche de matériau métallique, par exemple du zinc.

Quoi qu'il en soit, il faut considérer que le dispositif de l'invention peut être utilisé avec un toron 2 qui est gainé ou avec un toron 2 qui n'est pas gainé.

Le dispositif de guidage 1 comprend un corps 5 dans lequel est réalisé au moins un canal 6 courbe, comprenant un axe longitudinal 7 incurvé selon la courbure du dit canal 6 et au moins une première partie 8 qui, principalement située du côté de l'intrados de l'axe longitudinal 7, permet, dans la limite de la longueur du canal 6, l'appui du toron 2 sur au moins une portion de la face périphérique 10 dudit toron 2.

Par axe longitudinal 7, on désigne un axe qui s'étend selon la dimension longitudinale du canal 6, mais pas obligatoirement en une position médiane par rapport à la dimension transversale du canal 6 dans un plan de courbure 12 de ce canal 6.

Tel que cela a été précisé plus avant, l'axe longitudinal 7 indiqué a pour fonction de permettre la définition d'un intrados et d'un extrados, l'intrados étant une première zone située à l'intérieur de la courbe formée par cet axe longitudinal 7 et l'extrados étant une seconde zone située à l'extérieur de la courbe formée par ledit axe longitudinal 7.

Avantageusement, le dispositif de guidage 1 comprend un corps 5 dans lequel est réalisé au moins un canal 6 courbe avec au moins une seconde partie 11 qui, principalement située du côté de l'extrados de l'axe longitudinal 7, est associée à la première partie 8 et permet de guider le toron 2 lors de son engagement dans le canal 6, notamment, afin de le conformer dans un plan de courbure 12 qui contient l'axe longitudinal 7 du canal 6.

Il faut considérer que la face périphérique 10 du toron 2 est constituée au moins par les portions de surfaces périphériques des fils 4 qui le constituent ou, éventuellement, des portions de la surface périphérique d'une gaine 40 qui recouvre ces fils 4.

Aux figures 4 à 8, la forme de la face périphérique 10 du toron est symbolisée par un trait fin qui enveloppe la section transversale dudit toron 2.

De manière remarquable, la première partie 8 a une première section transversale qui est délimitée par au moins deux faces d'appui latéral, dites premières faces 13, lesquelles premières faces 13 sont :
- situées de manière à pouvoir coopérer localement avec la partie du toron 2 qui est engagée dans le canal 6, et ce, dans deux zones latérales 14 de sa face périphérique 10 qui sont situées de part et d'autre du plan de courbure 12,
- orientées de manière à former entre elles un angle « A » prédéterminé au moins suffisant pour amorcer un phénomène de coincement du toron 2 lorsqu'il reçoit une tension.

Le dispositif de guidage 1 est donc constitué pour définir un appui du toron qu'il est possible de qualifier d'appui bilatéral.

Cet appui bilatéral est donc de situation choisie et d'étendue limitée, de manière à au moins amorcer un phénomène de coincement du toron 2.

Par cet appui bilatéral, on recherche un phénomène de coincement qui est sensiblement identique à celui recherché dans le domaine des poulies pour courroies dites trapézoïdales.

L'engagement du toron entre les premières faces 13 produit des actions opposées (non représentées) qui induisent un serrage transversal dudit toron 2.

Le phénomène de coincement se produit que le toron 2 comprenne ou ne comprenne pas de gaine 40.

Lorsque le toron 2 comprend une gaine 40, les premières faces 13 appliquent localement la gaine 40 contre le toron 2 et produisent également des actions de serrage (non représentées) qui tendent à s'opposer :
- au glissement de fils 4 dudit toron 2 dans la gaine 40, et/ou
- au glissement du toron 2 dans le canal 6.

Tel que cela est représenté, le dispositif de guidage 1 est associé à un support 9, tel un sommet de pylône (non représenté).

Les deux premières faces 13 sont situées de part et d'autre du plan de courbure 12.

Les deux premières faces 13 sont symétriquement disposées par rapport au plan de courbure 12.

L'homme du métier est à même de déterminer la valeur de l'angle que les deux premières faces 13 forment, et ce, au moins par essais successifs.

L'homme du métier est également à même de déterminer la valeur de l'angle que les deux premières faces 13 forment, et ce, par calcul, en fonction du coefficient de frottement entre l'une et/ou l'autre de ces premières faces 13 et la face périphérique 10 du toron 2.

Avantageusement les premières faces 13 sont chacune sensiblement plane.

Les premières faces 13 peuvent être lisses ou comporter des reliefs.

Dans la première partie 8 du canal 6, les premières faces 13 se raccordent par une seconde face 16 qui est conformée et disposée de manière à être soustraite à tout contact avec le toron 2 lorsque ce dernier est en appui latéral sur les premières faces 13.

Par exemple, la seconde face 16 a des génératrices transversales qui s'étendent chacune sensiblement perpendiculairement au plan de courbure 12.

Dans une forme préférée de réalisation, la seconde face 16 a des génératrices transversales qui sont courbes de manière telle que, vue en coupe transversale, cette seconde face 16 apparaît sensiblement concave.

Quoi qu'il en soit la dite seconde face 16 est positionnée de manière à être soustraite à tout contact avec le toron 2 lorsque ce dernier est en appui latéral sur les deux premières faces 13.

Le dispositif de guidage 1 comprend au moins un élément amovible 17 qui, destiné à être introduit dans le canal 6 sensiblement avant l'introduction d'un toron 2 et à être extrait dudit canal 6 après mise en place dudit toron 2, est constitué pour être placé en appui sur la seconde face 16 et, lorsqu'il est placé en appui sur la dite seconde face 16, former une cale qui entrave l'appui simultané du toron 2 sur les deux premières faces 13.

Par cela le déplacement longitudinal du toron 2 dans le canal peut être obtenu sans coincement ou amorce de coincement.

Le retrait de l'élément amovible 17 permet d'amener le toron 2 en appui sur les deux premières faces 13 et de provoquer au moins une amorce de coincement de ce toron 2.

En ce qui concerne la seconde partie 11, elle est formée par une troisième face 18 définie par des lignes courbes orientées pour engendrer le glissement de la face périphérique 10 du toron 2, lors de son engagement dans le canal 6.

De préférence et de manière remarquable, la seconde partie 11 a une seconde section transversale de forme sensiblement semi-circulaire.

De manière notable, la troisième face 18 et la seconde face 16 sont espacées d'une manière au moins suffisante pour que, lorsqu'un élément amovible 17 se trouve placé en appui sur la seconde face 16, il puisse assurer sa fonction sans que l'engagement et le glissement d'un toron 2 dans le canal 6 soit entravé par un contact avec la troisième face 18.

L'homme du métier est à même d'ajuster les proportions sans faire preuve d'activité inventive.

L'homme du métier est également à même d'imaginer différentes manières pour réaliser les canaux du dispositif de guidage 1, une manière avantageuse consistant à utiliser des tubes qui, de section transversale conforme à celle définie, sont emprisonnés dans une masse de béton.

Les canaux du dispositif de guidage peuvent également être constitués par coffrage.

L'invention concerne également les constructions comprenant le dispositif de guidage qui vient d'être décrit.

## Revendications

1. Dispositif de guidage (1) pour torons (2), le dispositif de guidage (1) comprenant un corps (5) constitué par une masse de béton et dans lequel est réalisé au moins un canal (6) courbe, comprenant un axe longitudinal (7) qui est, dans un plan dit de courbure (12), incurvé selon la courbure dudit canal (6) et :
- au moins une première partie (8) qui, principalement située du côté de l'intrados de l'axe longitudinal (7), permet, dans la limite de la longueur du canal (6), l'appui du toron (2) sur au moins une portion de la face périphérique (10) dudit toron (2),
ce dispositif étant **caractérisé en ce que** la première partie (8) a une première section transversale qui est délimitée par au moins deux faces d'appui latéral, dites premières faces (13), lesquelles premières faces (13) sont :
- situées de manière à pouvoir coopérer localement avec la partie du toron (2) qui est engagée dans le canal (6), et ce, dans deux zones latérales (14) de sa face périphérique (10) qui sont situées de part et d'autre du plan de courbure (12),
- orientées de manière à former entre elles un angle (« A ») prédéterminé au moins suffisant pour amorcer par les premières faces (13) un phénomène de coincement du toron (2) lorsqu'il reçoit une tension.

2. Dispositif selon la revendication 1, **caractérisé en ce que**, dans la première partie (8) du canal (6), les premières faces (13) se raccordent par une seconde face (16) qui est conformée et disposée de manière à être soustraite à tout contact avec le toron (2) lorsque ce dernier est en appui latéral sur les premières faces (13).

3. Dispositif selon la revendication 2, **caractérisé en ce que** la seconde face (16) a des génératrices transversales qui sont courbes de manière telle que, vue en coupe transversale, cette seconde face (16) apparaît sensiblement concave.

4. Dispositif selon la revendication 2 ou 3, **caractérisé en ce que** le dispositif de guidage (1) comprend au moins un élément amovible (17) qui, destiné à être introduit dans le canal (6) sensiblement avant l'introduction d'un toron (2) et à être extrait dudit canal (6) après mise en place dudit toron (2), est constitué pour être placé en appui sur la seconde face (16) et, lorsqu'il est placé en appui sur ladite seconde face (16), former une cale qui entrave l'appui simultané du toron (2) sur les deux premières faces (13).

5. Dispositif selon l'une quelconque des revendications 1 à 4 et de type comprenant au moins un canal (6) avec au moins une seconde partie (11) qui, principalement située du côté de l'extrados de l'axe longitudinal (7) dudit canal (6), est associée à la première partie (8) et permet de guider le toron (2) lors de son engagement dans le canal (6), notamment, afin de le conformer dans un plan de courbure (12) qui contient l'axe longitudinal (7) du canal (6), ce dispositif étant **caractérisé en ce que** ladite seconde partie (11) est formée par une troisième face (18) définie par des lignes courbes orientées pour engendrer le glissement de la face périphérique (10) du toron (2), lors de son engagement dans le canal (6).

6. Dispositif selon la revendication 5, **caractérisé en ce que** la troisième face (18) et la seconde face (16) sont espacées d'une manière au moins suffisante pour que, lorsqu'un élément amovible (17) se trouve placé en appui sur la seconde face (16), il puisse assurer sa fonction sans que l'engagement et le glissement d'un toron (2) dans le canal (6) soit entravé par un contact avec la troisième face (18).

7. Dispositif selon la revendication 5 ou 6, **caractérisé en ce que** la seconde partie (11) a une seconde section transversale de forme sensiblement semi-circulaire.

8. Dispositif selon l'une quelconque des revendications 1 à 7, **caractérisé en ce que** les deux premières faces (13) sont situées de part et d'autre du plan de courbure (12).

9. Dispositif selon l'une quelconque des revendications 1 à 8, **caractérisé en ce que** les deux premières faces (13) sont symétriquement disposées par rapport au plan de courbure (12).

10. Dispositif selon l'une quelconque des revendications 1 à 9, **caractérisé en ce que** les premières faces (13) sont chacune sensiblement planes.

11. Dispositif selon l'une quelconque des revendications 1 à 10, **caractérisé en ce que** ledit au moins un canal est réalisé par coffrage.

12. Dispositif selon l'une quelconque des revendications 1 à 10, **caractérisé en ce que** ledit au moins un canal est réalisé d'un tube qui est emprisonné dans la masse de béton.

13. Constructions comprenant le dispositif selon l'une quelconque des revendications 1 à 12.

## Patentansprüche

1. Führungseinrichtung (1) für Drahtadern (2), wobei die Führungseinrichtung (1) einen Körper (5) aufweist, der aus einer Betonmasse besteht und in dem ein gebogener Kanal (6) ausgebildet ist, der eine longitudinale Achse (7) aufweist, die entsprechend der Biegung des Kanals (6) in einer Ebene (12) der Biegung gebogen ist, und die aufweist:
- wenigstens einen ersten Teil (8), der hauptsächlich auf der Seite der Wölbungsfläche der longitudinalen Achse (7) angeordnet ist und innerhalb der Begrenzung der Länge des Kanals (6) das Anpressen der Drahtader (2) an wenigstens einem Bereich der Umfangsfläche (10) der Drahtader (2) ermöglicht,
wobei diese Einrichtung dadurch charakterisiert ist, dass das erste Teil (8) einen ersten transversalen Bereich hat, der durch wenigstens zwei seitliche Pressflächen (13) begrenzt ist, die als erste Flächen (13) bezeichnet werden, wobei diese ersten Flächen (13):
- derart angeordnet sind, dass sie lokal mit dem Teil der Drahtader (2) zusammen wirken, der in den Kanal (6) eingreift und zwar an zwei seitlichen Zonen (14) an seiner Umfangsfläche (10), die auf jeder Seite der Biegungsebene (12) gelegen sind,
- so gedreht sind, dass zwischen ihnen ein vorbestimmter Winkel (A) ausgebildet ist, der wenigstens ausreichend ist, um mittels den ersten Flächen (13) ein Phänomen zu starten, wonach die Drahtader (2) eingekeilt wird, wenn sie unter Spannung tritt.

2. Einrichtung nach Anspruch 1, **dadurch gekennzeichnet, dass** in dem ersten Teil (8) des Kanals (6) die ersten Flächen (13) durch eine zweite Fläche (16) verbunden sind, die derart geformt und angeordnet ist, dass jeder Kontakt mit der Drahtader (2) vermieden werden kann, wenn letztere in seitlichem Kontakt mit den ersten Flächen (13) ist.

3. Einrichtung nach Anspruch 2, **dadurch gekennzeichnet, dass** die zweite Fläche (16) transversale Ausbildungen hat, welche Kurven derart sind, dass aus Sicht eines transversalen Bereichs, diese zweite Fläche (16) im Wesentlichen konkav erscheint.

4. Einrichtung nach Anspruch 2 oder 3, **dadurch gekennzeichnet, dass** die Führungseinrichtung (1) wenigstens ein abnehmbares Element (17) aufweist, das zum Einsetzen in den Kanal (6) im Wesentlichen vor dem Einsetzen einer Drahtader (2) und zum Herausnehmen aus dem Kanal (6) nach dem Einsetzen der Drahtader (2) vorgesehen ist, das zum Anordnen auf der zweiten Fläche (16) ausgebildet ist und, wenn es auf der zweiten Fläche (16) angeordnet ist, einen Keil formt, der das gleichzeitige Berühren der Drahtader (2) der ersten Flächen (13) verhindert.

5. Einrichtung nach einem der Ansprüche 1 bis 4, nach der Art, die wenigstens einen Kanal (6) mit wenigstens einem zweiten Teil (11) aufweist, der hauptsächlich auf der Seite der Wölbungsfläche der longitudinalen Achse (7) des Kanals (6) gelegen ist und der mit dem ersten Teil (8) verbunden ist und der eine Führung der Drahtader (2) während des Einsetzens in den Kanal (6) ermöglicht, insbesondere um es in der Biegungsebene (12) zu formen, welche die longitudinale Achse (7) des Kanals (6) enthält, wobei die Einrichtung dadurch charakterisiert ist, dass der zweite Teil (11) durch eine dritte Fläche (18) ausgebildet ist, die durch gebogene Linien definiert ist, die zur Ausbildung eines Rutschens der Umfangsfläche (10) der Drahtader (2), zur gleichen Zeit zu der diese in den Kanal (6) eingesetzt wird, angeordnet ist.

6. Einrichtung nach Anspruch 5, **dadurch gekennzeichnet, dass** die dritte Fläche (18) und die zweite Fläche (16) wenigstens derart ausreichend beabstandet sind, dass deren Funktion gesichert ist, ohne dass das Einsetzten und das Rutschen der Drahtader (2) in dem Kanal (6) durch einen Kontakt mit der dritten Fläche (18) behindert ist, wenn ein abnehmbares Element vorliegt, das die zweite Fläche (16) berührt.

7. Einrichtung nach Anspruch 5 oder 6, **dadurch gekennzeichnet, dass** der zweite Teil (11) einen zweiten transversalen Bereich hat, der im Wesentlichen eine halbkreisförmige Form aufweist.

8. Einrichtung nach einem der Ansprüche 1 bis 7, **dadurch gekennzeichnet, dass** die zwei ersten Flächen (13) jeweils auf gegenüberliegenden Seite der Biegungsebene (12) angeordnet sind.

9. Einrichtung nach einem der Ansprüche 1 bis 8, **dadurch gekennzeichnet, dass** die beiden ersten Flächen (13) in Bezug auf die Biegungsfläche (12) symmetrisch angeordnet sind.

10. Einrichtung nach einem der Ansprüche 1 bis 9, **dadurch gekennzeichnet, dass** die ersten Flächen (13) im Wesentlichen flach sind.

11. Einrichtung nach einem der Ansprüche 1 bis 10, **dadurch gekennzeichnet, dass** der wenigstens eine Kanal durch eine Verschalung gebildet wird.

12. Einrichtung nach einem der Ansprüche 1 bis 10, **dadurch gekennzeichnet, dass** der wenigstens eine Kanal von einer Röhre gebildet wird, die in der Betonmasse fest ist.

13. Konstruktion mit einer Einrichtung nach einem der Ansprüche 1 bis 11.

## Claims

1. Guiding device (1) for strands (2), the guiding device (1) comprising a body (5) made up of a mass of concrete and in which a curved channel (6) is made, comprising a longitudinal axis (7) which, in a plane of curvature (12), is curved according to the curvature of the channel (6) and :
- at least one first part (8) which, mainly situated on the side of the intrados of the longitudinal axis (7), allows, in the limit of the length of the channel (6), the pressing of the strand (2) on at least one portion of the peripheral face (10) of the strand (2),
this device being **characterised in that** the first part (8) has a first transverse section which is delimited by at least two lateral pressing faces (13), referred to as first faces (13), these first faces (13) being :
- situated so as to be able to locally co-operate with the part of the strand (2) which is engaged in the channel (6), and this, in two lateral zones (14) of its peripheral face (10) which are situated on either side of the plane of curvature (12),
- turned so as to form between them a predetermined angle (« A ») at least sufficient to begin by means of the first faces (13) a phenomenon of wedging of the strand (2) when it receives tension.

2. Device according to claim 1, **characterised in that**, in the first part (8) of the channel (6), the first faces (13) are joined by a second face (16) which is shaped and positioned so as to be able to escape any contact with the strand (2) when the latter is in lateral contact on its first faces (13).

3. Device according to claim 2, **characterised in that** the second face (16) has transverse generatrices which are curves such that, seen in transverse section, this second face (16) appears substantially concave.

4. Device according to claim 2 or 3, **characterised in that** the guiding device (1) comprises at least one removable element (17) which, intended to be inserted in the channel (6) substantially before insertion of a strand (2) and to be extracted from the channel (6) after placement of the strand (2), is designed to be placed on the second face (16) and, when it is placed on the said second face (16), to form a wedge which prevents the simultaneous leaning of the strand (2) against the two first faces (13).

5. Device according to any one of the claims 1 to 4 of the type comprising at least one canal (6) with at least one second part (11) which, mainly situated on the side of the extrados of the longitudinal axis (7) of the channel (6), is connected to the first part (8) and allows guiding the strand (2) during its insertion in the channel (6), in particular, in order to shape it in a plane of curvature (12) which contains the longitudinal axis (7) of the channel (6), the device being **characterised in that** said second part (11) is formed by a third face (18) defined by curved lines positioned for bringing about the sliding of the peripheral face (10) of the strand (2), at the time of its insertion in the channel (6).

6. Device according to claim 5, **characterised in that** the third face (18) and the second face (16) are spaced at least sufficiently so that, when a removable element is located to lean against the second face (16), it can ensure its function without the insertion and the sliding of the strand (2) in the channel (6) being impeded by a contact with the third face (18).

7. Device according to claim 5 or 6, **characterised in that** the second part (11) has a second transverse section of substantially semi-circular shape.

8. Device according to any one of the claims 1 to 7, **characterised in that** the two first faces (13) are situated on one side and on the other side of the plane of curvature (12).

9. Device according to any one of the claims 1 to 8, **characterised in that** the two first faces (13) are symmetrically disposed with respect to the plane of curvature (12).

10. Device according to any one of the claims 1 to 9, **characterised in that** the first faces (13) are each substantially flat.

11. Device according to any one of the claims 1 to 10, **characterised in that** said at least one channel is created by formwork.

12. Device according to any one of the claims 1 to 10, **characterised in that** said at least one channel is formed of a tube which is fixed in the concrete mass.

13. Constructions comprising the device according to any one of the claims 1 to 12.
